# EUROPEAN PATENT APPLICATION

(11) **EP 4 198 847 A1**
(43) Date of publication of application: **21.06.2023**
(21) Application number: 21214922.3
(22) Date of filing: 15.12.2021
(51) Int. Cl.: G06Q 10/04, G06Q 10/08, G06Q 50/28

(54) **PRODUCTION FORECAST METHODS FOR MASS EXCAVATION PROJECTS**

(71) Applicant: VOLVO TRUCK CORPORATION, 405 08 Göteborg (SE)
(72) Inventor: SOHLBERG, Per, 436 52 Hovås (SE)
(74) Representative: Zacco Sweden AB

(57) **Abstract**

A production forecast system (260), executed on a remote server (160) for monitoring a production rate of a mass excavating project (200) at a project site, where the system is arranged to:
obtain historical load data associated with transports (240, 260) of the project at the site,
adapt a model (165) configured to predict a future production rate for the mass excavating project based on the obtained historical load data, and
predict a future production rate of the mass excavating project at the site based on current measured load data and on the adapted model.

## Description

### TECHNICAL FIELD

The invention relates generally to heavy-duty vehicles such as trucks and construction machines and in particular to dump trucks and excavators. Methods to forecast a production rate of a mass excavation project involving excavators and dump trucks are disclosed, and also methods for suggesting a suitable production pace to meet a future target production level.

### BACKGROUND

Larger infrastructure projects normally involve many different entities which perform respective sub-tasks in complex interdependency. For instance, in a mass excavation project excavators dig out material which is then transported away from the work site to a material deposit site by dump trucks. The deposit site, the dump trucks, and the excavators all have their respective capacities which need to be matched to each other in order to maintain a high project efficiency.

It is also desired to maintain a correct pace in the overall production process and at the same time meet a required production level. If the pace is too high, then there is a risk that the work will be finished prematurely and that machines will be left inactivate for a time period, which drives cost. On the other hand, if the pace is too slow, then any following sub-tasks must be placed on hold, which also drives cost.

There is a need for systems and methods which facilitate monitoring of the production rate in a mass excavating project at a project site.

### SUMMARY

It is an object of the present disclosure to provide techniques for monitoring and also forecasting production rate and/or production levels in a mass excavating project at a project site. This object is obtained by a production forecast system executed on a remote server and/or on a control unit of a heavy-duty vehicle. The system is set up to monitor and to forecast a production rate and/or production level of a mass excavating project at a specific project site. The system is arranged to obtain historical load data associated with transports of the project at the site. The system is also configured to adapt a model of production in the project based on the obtained historical load data, which model is then used together with current load data to predict, i.e., forecast, a future production rate and/or a future production level for the mass excavating project based on the obtained historical load data. This way project-specific characteristics of a given project performed at a given site is accounted for in the forecast, since the model is continuously adapted based on historical load data gathered for the project performed at the site, it also changes as the characteristics of the project changes. This has been shown to improve the forecasts.

The system preferably adapts the model by training a machine learning model based on the historical load data. Machine learning has been shown to be particularly suitable for the present application of forecasting production rate and/or production level in a site-specific and project-specific manner. Various machine learning techniques can be applied, such as different types of neural networks. The machine learning models can be trained using relatively straight-forward and well-known methods for training machine learning models.

The historical load data may, e.g., comprise digital load receipts obtained from plurality of excavators of the project at the site. Such digital load receipts are often already available at a project site, which is an advantage since the herein disclosed techniques can then be applied without first gathering any additional data at the site. Rather, the herein proposed techniques can be implemented based on already existing information infrastructure in many mass excavation projects.

The systems discussed herein may furthermore be arranged to relate the predicted future production rate to a target production rate or level, and to trigger an action in case of a discrepancy between the target production rate (or production level) and the predicted future production rate (or production level). This feature allows a project controller or other operational entity to adjust the pace of the mass excavation project such that the target is met and also not overshot. Both overshoot and undershoot may be avoided by using the herein disclosed techniques, which is an advantage. For instance, if a future production level overshoots the target production level by an amount, the action may comprise suggesting a decrease in production pace of the project at the site. Likewise, if a future production level falls short of the target production level by an amount, the action may comprise suggesting an increase in production pace of the project at the site. Production pace changes may, e.g., entail adding or removing assets (dump trucks and/or excavators) from the mass excavating project.

To improve model adaptation and model convergence, the system is optionally arranged to initialize the model using data obtained from another mass excavating project, or, equivalently, start from an already existing model trained in some other project. This other mass excavating project is preferably selected from a group of "similar" mass excavation projects. For instance, from a group of mass excavating projects performed in the same geographical region, of about the same size, with approximately the same target end result, and so on. This data may provide relevant initialization data, which can shorten the model adaptation time significantly.

The obtained historical load data may furthermore comprise loading asset identification data pertaining to a loading asset associated with a given load and/or transport asset identification data pertaining to a transport asset associated with a given load. This data allows the system to detect which or at least how many assets that are involved in the mass excavating project at any given point in time. By exploiting this data, the system is able to better forecast a production rate. A database comprising asset capacity data indexed by asset identification can be used to infer an expected capacity of the assets currently active within the mass excavation project. This type of database may further improve on the accuracy of the forecasts made by the system. It is noted that the relationship between production rate and number of assets is not always straight forward to determine. In fact, more assets of a given kind sometimes lead to a reduction in production rate, for instance in case there is a bottle-neck somewhere in the production system which causes blockage if too many assets of a given kind are assigned to the project at the site.

According to some aspects, the system is arranged to determine an expected future production rate and/or an expected future production level, and to trigger an action in case of a discrepancy between the expected future production rate and/or the expected future production level and a respective forecasted future production rate and/or a respective forecasted future production level. A discrepancy may indicate that something is not right in the project. By triggering an investigative action, the source of the discrepancy can be identified and mitigating actions can be taken to resolve any potential issues that may have arisen, which is an advantage. The expected future production rate and/or expected future production level may, for instance, be determined based on a statistical analysis of historical production rates or production levels, such as a mean rate or level.

There is also disclosed herein methods, computer programs, computer readable media, computer program products, remote servers and vehicles associated with the above discussed advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

### BRIEF DESCRIPTION OF THE DRAWINGS

With reference to the appended drawings, below follows a more detailed description of embodiments of the invention cited as examples. In the drawings:
- Figure 1: shows an example heavy-duty vehicle;
- Figure 2: schematically illustrates a mass excavation project;
- Figure 3: is a graph illustrating weekly progress in a project;
- Figure 4: is a flow chart illustrating a method;
- Figure 5: schematically illustrates a control unit; and
- Figure 6: shows an example computer program product.

### DETAILED DESCRIPTION OF EXAMPLE EMBODIMENTS OF THE INVENTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

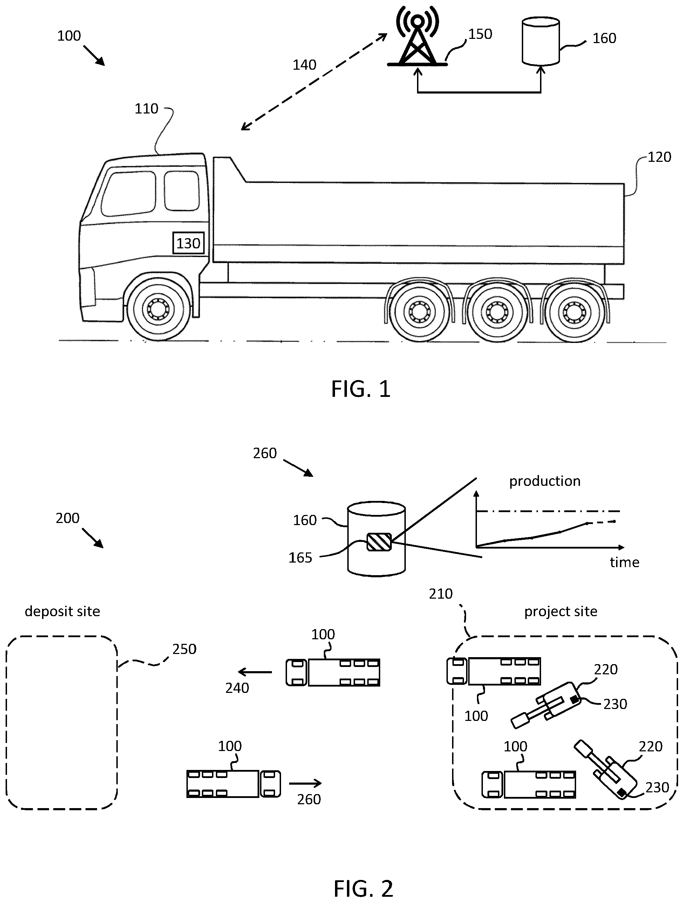

It is to be understood that the present invention is not limited to the embodiments described herein and illustrated in the drawings; rather, the skilled person will recognize that many changes and modifications may be made within the scope of the appended claims. Figure 1 illustrates an example vehicle 100 for cargo transport where the herein disclosed techniques can be applied with advantage. The example vehicle 100 is a dump truck comprising a cab 110 and a bed 120 which can be used to transport material away from a mass excavation site, for instance as part of a larger infrastructure project such as a road construction project, a tunnel construction project, or a building site. An excavator, wheel loader, or other form of loading asset is used to load material onto the dump truck, which then transports the material away to a destination where the material is unloaded.

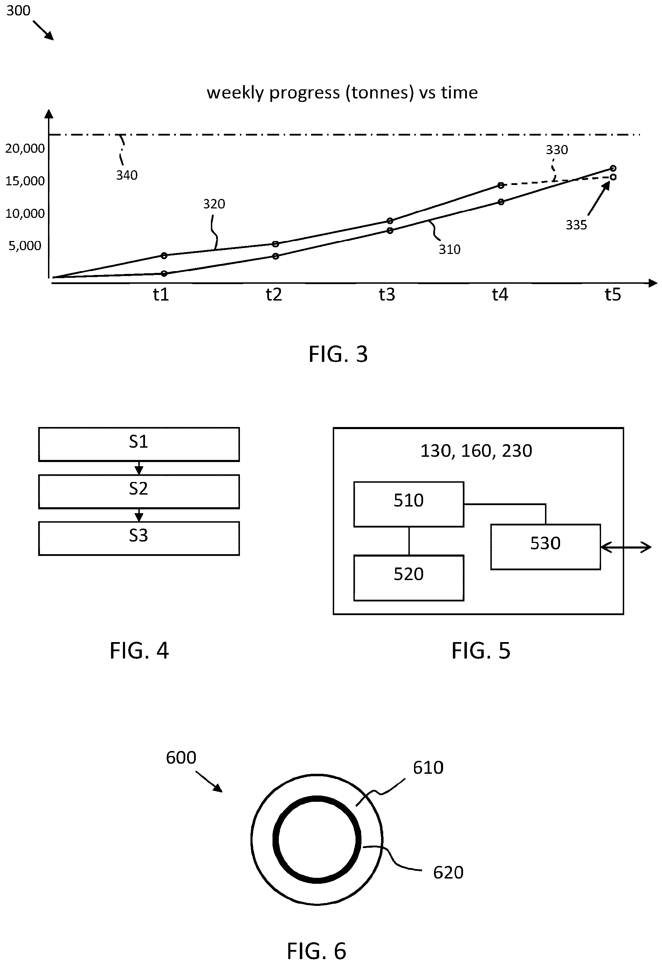

A control unit 130 on the vehicle may be in communication with a remote server 160 via wireless link 140 over an access point 150 that could form part of a cellular access network such as a fifth generation (5G) or sixth generation (6G) wireless access network. The control unit 130 may comprise processing circuitry, as will be discussed below in connection to Figure 5.

The control unit 130 may optionally be arranged to determine a current load on the bed 120, and to report this load to the remote server 160, possibly together with data such as identification data to identify the vehicle 100, a time stamp, a starting location, and a destination of the current transport mission. This type of data may be referred to as a digital load receipt.

A digital load receipt can also be issued by the loading asset, e.g., an excavator or a wheel loader. These loading assets may also comprise respective on-board control units and systems configured to determine a weight of loaded material, and format a report which may also comprise other data items, such as identification data to identify the loading asset, along with a timestamp.

Figure 2 illustrates an example production process in a mass excavation project 200. There are one or more project sites 210 in the project where excavators 220 are used to dig up material which is then loaded onto dump trucks 100. The trucks 100 then transport the excavated material away to a deposit site 250, before returning 260 again to the project site to receive a new load.

Note that, generally, a project can comprise more than one project site and more than one deposit site.

The excavators 220 in the example of Figure 2 comprises control units 230 which are arranged to generate load receipts. A load receipt is a unit of data which indicates, e.g., a weight of the material that has been loaded onto a given dump truck100. The load receipts are uploaded to the remote server 160. A collection of obtained such load receipts constitute historical load data associated with transports of the project at the site. A unit of historical load data is generally associated with some form of time stamp which indicates when during the day that the load was transported. A date is often also included in a unit of historical load data, as well as a source location and a destination allowing to identify the transport route of a given transport. These digital load receipts provide information about the specific project, such as natural variations in production rate over a week. The information in the digital load receipts can also be complemented by additional data, such as weather reports, ambient temperatures, and traffic reports which indicate traffic density along, e.g., key routes.

Of course, historical load data can also be obtained from other sources, such as the dump trucks which may be configured to measure a weight of transported material. A device located at the deposit site may also comprise means for determining a weight of the material deposited by a given dump truck.

It is often desired to forecast a future production level in a mass excavation project, i.e., to estimate how much material that will be transported at some time in the future. To do this, extrapolation has previously been used. However, such extrapolation does not account for variation in the production rate over time, nor is it easy to adapt it to a given production site and capture variations in the production rate specific to a given site using only interpolation.

To improve the forecasts of production rate and production levels in a mass excavation project, it is proposed to adapt a site specific model configured to predict a future production rate or production level for the mass excavating project based on the obtained historical load data. In other words, with reference also to Figure 3, there is disclosed herein a production forecast system 260, 300, executed on a remote server 160 and/or on a control unit 130 of a heavy-duty vehicle, for monitoring and forecasting a production rate and/or production level of a mass excavating project 200 at a project site. The system is arranged to obtain historical load data 310, 320 associated with transports 240, 260 of the project at the site. The load data may, e.g., be obtained as digital load receipts issued by the excavator units, by the dump trucks, and/or by some entity at a deposit site where the material is unloaded. Such load data is preferably associated with a date and/or a time stamp together with the amount of transported material, such as perhaps its weight. The data in the digital load receipts is optionally complemented by data from weather reports and traffic reports, which indicate weather status (rainfall, temperatures, and wind conditions) and traffic status (such as traffic densities and road conditions).

The production forecast system 260, 300 is arranged to adapt a model 165 configured to predict a future production rate 330 and/or production level 335 for the mass excavating project based on the obtained historical load data. This model is a mathematical model of production in the given project at the project site, it may be continuously or at least periodically adapted to follow changes in the production rates seen for the project.

By adapting the model, the system is able to capture site-specific characteristics in the production rate which cannot be captured by a mere extrapolation of production. For instance, at some project sites the production rate often declines on Friday afternoon. These types of effects can be incorporated into a model of this kind, and used to improve the accuracy in future forecasts. Thus, using the adapted model, the production forecast system 260, 300 is able to accurately predict a future production rate 330 of the mass excavating project at the site based on current measured load data and on the adapted model. This prediction will be specific to the project site, and is therefore likely to be more accurate compared to just extrapolation the historical load data since it is often able to capture site-specific variation over time in the production rate. By adding additional data to the model, such as weather data, traffic reports, and road condition information, the model can be refined to even more accurately model production rate in a particular mass excavation project.

The model used to predict the future production rate and/or production level is preferably a machine learning model. Thus, according to some aspects the system 260, 300 is arranged to adapt the model by training machine learning model based on the historical load data 310, 320. The model may, e.g., be a neural network or the like, which is trained using the historical load data. To adapt the model, standard techniques may be applied, which will not be discussed in more detail herein. The training is performed continuously using load data as it becomes available, or at least periodically, using batches of historical load data from the project. To improve on the convergence time and accuracy of the model, it may be initialized using a model trained for a similar project at a similar work site. By initializing the model 165 using data obtained from another mass excavating project deemed similar to the current project, the convergence time may be shortened, which is an advantage.

The obtained historical load data preferably comprises asset identification data which allows the system to identify the assets which are currently operating in the project. This allows the system to detect when the assets assigned to the project changes, and update the forecasts accordingly. For instance, the obtained historical load data may comprise loading asset identification data pertaining to a loading asset associated with a given load. Given the active loading assets, the model can be used to improve the forecast of production rate or future production level, since the number of active loading assets (and their type) can be expected to impact the production rate in the project. The obtained historical load data may also comprise transport asset identification data pertaining to a transport asset associated with a given load. Again, by including this type of information in, e.g., the digital load receipts, the system will be able to infer a transport capacity and thus improve its forecast of future production rate or future production level. The model may be able to capture correlations which are otherwise hard to predict. For instance, some asset types may be sensitive to certain types of weather. Also, certain asset types may perform particularly well in certain types of mass excavating projects, and not in other types.

The system 260, 300 optionally also comprises a database of asset capacity data indexed by the asset identification data. This allows the system to associate a capacity with a given asset, and further refine the forecasted production rate and/or level, since the production capacity of the currently active assets in the project may have a significant impact on the production rate.

The system, using information related to currently active assets and their capacity, may furthermore determine an expected future production rate and/or an expected future production level, and to trigger an action in case of a discrepancy between the expected future production rate and/or the expected future production level and a respective forecasted future production rate and/or a respective forecasted future production level. In the example of Figure 3, obtained historical load data 310 for the previous month is shown together with the load data 320 for the current month. A target production level 340 to be attained is also shown. The system disclosed herein considers the obtained historical load data, and performs a prediction of a future production rate given the adapted model and the current state of the project.

The system 260, 300 may furthermore be arranged to relate the predicted future production rate 330 or level 335 to a target production rate or level 340 given the current measured load data 320, and to trigger an action in case of a discrepancy between the target production level 340 and the predicted future production rate 330. For instance, if a future production level 335 overshoots the target production level 340 by an amount, the triggered action may comprise suggesting a decrease in production pace of the project at the site. Also, if a forecasted future production level 335 falls short of the target production level 340 by an amount, the triggered action may comprise suggesting an increase in production pace of the project at the site.

Figure 4 is a flow chart describing a method which summarizes the above discussion. The flowchart shows a computer implemented method for monitoring and forecasting a production rate and/or a production level of a mass excavating project 200 at a project site. The method comprises obtaining S1 historical load data 310, 320 associated with transports 240, 260 of the project at the site, adapting S2 a model 165 configured to predict a future production rate 330 and or production level 335 for the mass excavating project based on the obtained historical load data, and predicting S3 a future production rate 330 of the mass excavating project at the site based on current measured load data and on the adapted model.

It is appreciated that the method can be performed at a remote server 160, or at one or more vehicles 100, 220. A combination of different processing units can of course also be tasked with executing the techniques discussed herein.

Figure 5 schematically illustrates, in terms of a number of functional units, the components of a control unit such as the VUC 130, 230 or the remote server 160. The control unit is configured to execute at least some of the functions discussed above for control of a heavy-duty vehicle 100. Processing circuitry 510 is provided using any combination of one or more of a suitable central processing unit CPU, multiprocessor, microcontroller, digital signal processor DSP, etc., capable of executing software instructions stored in a computer program product, e.g. in the form of a storage medium 520. The processing circuitry 510 may further be provided as at least one application specific integrated circuit ASIC, or field programmable gate array FPGA.

Particularly, the processing circuitry 510 is configured to cause the control unit 101 to perform a set of operations, or steps, such as the methods discussed in connection to Figure 4. For example, the storage medium 520 may store the set of operations, and the processing circuitry 510 may be configured to retrieve the set of operations from the storage medium 520 to cause the control unit 600 to perform the set of operations. The set of operations may be provided as a set of executable instructions. Thus, the processing circuitry 510 is thereby arranged to execute methods as herein disclosed.

The storage medium 520 may also comprise persistent storage, which, for example, can be any single one or combination of magnetic memory, optical memory, solid state memory or even remotely mounted memory.

The control unit 130, 160, 230 may further comprise an interface 530 for communications with at least one external device. As such the interface 530 may comprise one or more transmitters and receivers, comprising analogue and digital components and a suitable number of ports for wireline or wireless communication.

The processing circuitry 510 controls the general operation of the control unit, e.g., by sending data and control signals to the interface 530 and the storage medium 520, by receiving data and reports from the interface 530, and by retrieving data and instructions from the storage medium 520. Other components, as well as the related functionality, of the control node are omitted in order not to obscure the concepts presented herein.

Figure 6 illustrates a computer readable medium 610 carrying a computer program comprising program code means 620 for performing the methods illustrated in Figure 4, when said program product is run on a computer. The computer readable medium and the code means may together form a computer program product 600.

## Claims

1. A production forecast system (260, 300) for monitoring and forecasting a production rate and/or production level of a mass excavating project (200) at a project site, where the system is arranged to:
obtain historical load data (310, 320) associated with transports (240, 260) of the project at the site,
adapt a model (165) configured to predict a future production rate (330) for the mass excavating project based on the obtained historical load data, and
predict a future production rate (330) and/or a future production level (335) of the mass excavating project at the site based on current measured load data and on the adapted model.

2. The system (260, 300) according to claim 1, wherein the system (260, 300) is arranged to adapt the model by training a machine learning model such as a neural network based on the obtained historical load data (310, 320).

3. The system (260, 300) according to claim 1 or 2, wherein the historical load data (310, 320) comprises digital load receipts obtained from plurality of excavators of the project at the site.

4. The system (260, 300) according to any previous claim, wherein the load data and the production rate is measured in terms of transported material weight.

5. The system (260, 300) according to any previous claim, further arranged to relate the predicted future production rate (330) to a target production rate or level (340), and to trigger an action in case of a discrepancy between the target production rate or level (340) and the predicted future production rate (330) or level (335).

6. The system (260, 300) according to claim 5, where, if a future production level (335) overshoots the target production level (340) by an amount, the action comprises suggesting a decrease in production pace of the project at the site.

7. The system (260, 300) according to claim 5 or 6, where, if a future production level (335) falls short of the target production level (340) by an amount, the action comprises suggesting an increase in production pace of the project at the site.

8. The system (260, 300) according to any previous claim, further arranged to initialize the model (165) using data obtained from another mass excavating project.

9. The system (260, 300) according to any previous claim, where the obtained historical load data comprises loading asset identification data pertaining to a loading asset associated with a given load.

10. The system (260, 300) according to any previous claim, where the obtained historical load data comprises transport asset identification data pertaining to a transport asset associated with a given load.

11. The system (260, 300) according to any of claims 9 or 10, comprising a database of asset capacity data indexed by asset identification.

12. The system (260, 300) according to claim 11, arranged to determine an expected future production rate and/or an expected future production level, and to trigger an action in case of a discrepancy between the expected future production rate and/or the expected future production level and a respective forecasted future production rate and/or a respective forecasted future production level.

13. The system (260, 300) according to any previous claim, further arranged to obtain weather and/or traffic report data associated with transports (240, 260) of the project at the site, and adapt the model (165) also based on the obtained weather and/or traffic report data.

14. A computer implemented method for monitoring and forecasting a production rate of a mass excavating project (200) at a project site, the method comprising:
obtaining (S1) historical load data (310, 320) associated with transports (240, 260) of the project at the site,
adapting (S2) a model (165) configured to predict a future production rate (330) for the mass excavating project based on the obtained historical load data, and
predicting (S3) a future production rate (330) of the mass excavating project at the site based on current measured load data and on the adapted model.

15. A computer program (620) comprising program code means for performing the steps of claim 14 when said program is run on a computer or on processing circuitry (610) of a control unit (130, 160, 230).

16. A remote server (160) comprising processing circuitry (510) arranged to execute the method according to claim 14.

17. A heavy-duty vehicle (100, 220) comprising a control unit (130) with processing circuitry (510) arranged to execute the method according to claim 14.
